# EUROPEAN PATENT SPECIFICATION

(11) **EP 2 671 899 B1**
(45) Date of publication and mention of the grant of the patent: **16.01.2019**
(21) Application number: 11857504.2
(22) Date of filing: 29.04.2011
(51) Int. Cl.: C08G 18/42, C08G 18/72, C08G 63/91, C08L 101/16

(54) **BIODEGRADABLE RESIN AND METHOD FOR MANUFACTURING SAME**
BIOLOGISCH ABBAUBARES HARZ UND HERSTELLUNGSVERFAHREN DAFÜR
RÉSINE BIODÉGRADABLE ET PROCÉDÉ POUR FABRIQUER CELLE-CI

(30) Priority: 31.01.2011 KR 20110009435
(43) Date of publication of application: 11.12.2013
(73) Proprietor: Saehan Polymer Co., Ltd, Gyeonggi-do 17800 (KR); S-Enpol Co., Ltd., Gangwon-do 220-805 (KR)
(72) Inventor: KANG, Gyung Don, Daejeon 305-768 (KR); YUN, Ki Chull, Cheonan-si Chungcheongnam-do 330-260 (KR); CHUN, Jong Pil, Daejeon 305-728 (KR); AHN, Ji Soo, Daejeon 305-744 (KR); KIM, Ye Jin, Seoul 130-100 (KR); KIM, Sei Hoon, Wonju-si Gangwon-do 220-805 (KR); HONG, Seong Yong, Wonju-si Gangwon-do 220-805 (KR); PARK, Sung Bae, Incheon 407-788 (KR)
(74) Representative: Kador & Partner PartG mbB
(86) International application number: PCT/KR2011/003211
(87) International publication number: WO 2012/105730

(56) References cited:
- EP-A1- 1 882 712
- JP-A- 2007 197 653
- KR-A- 20020 065 180
- US-A- 6 018 004
- US-A- 6 103 858

## Description

### [Technical Field]

The present invention relates to a method of preparing a biodegradable resin, which can provide a resin using a limited amount of a chain extender during preparation of the resin and having excellent properties, and thus can be safely used in various fields.

### [Background Art]

Biodegradable resins are synthetic resins developed as new materials which do not bring about the problem of environmental contamination by being degraded into water and carbon dioxide or water and methane gas by means of microorganisms in the nature, for example, bacteria, algae, and molds. The biodegradable resins include cellulose-based polymers, starches, and polylactides (PLAs), which are difficult to prepare in a high molecular weight, and have a low mechanical strength.

Meanwhile, a molecular weight should be increased by chain extension between polymers to increase mechanical properties of a polyester-based biodegradable resin such as poly(butylene succinate) (PBS), poly(butylene succinate-co-adipate) (PBSA) or poly(butylene adipate-co-terephthalate) (PBAT). In this case, a chain extender such as an isocyanate is used.

However, the isocyanate is a harmful component to the human body because of toxicity in respiratory organs of organisms, stimulation of eyes and upper respiratory organelles, and inflammation caused by contact with skin or eyes. In addition, when exposed to environmental components such as soil, underground water and air, the isocyanate acts as a contamination factor. Accordingly, methods of minimizing the use of such an isocyanate and maintaining or increasing mechanical properties of a resin have been researched.

Korean Patent No. 0129794 discloses a method of preparing a resin using a polyvalent isocyanate as a chain extender in an amount of 0.1 to 5 parts by weight based on aliphatic polyester, and Korean Patent No. 0365455 discloses a method of using 0.1 to 5 wt% of diisocyanate with respect to 95 to 99.9 wt% of polyester or 0.1 to 5 wt% of diisocyanate with respect to polyester. Particularly, Korean Patent No. 0129794 discloses that when the polyvalent isocyanate is used in an amount of less than 0.1 parts by weight, there is no sufficient effect on the extension of polymer chain and increasing molecular weight of the polyester.

### [Disclosure]

### [Technical Problem]

The present invention is directed to providing a method of a biodegradable resin using a minimal amount of a polyvalent isocyanate used as a chain extender in preparation of the biodegradable resin and having desired properties to be used for various applications.

The biodegradable resin can be safely used for products, for example, packing materials for food or medicines, in which, the contents of the isocyanate component, harmful component to the human body, may be limited or regulated.

### [Technical Solution]

The biodegradable resin has nitrogen content of 160 ppm or less which is contained in a urethane bond generated by a reaction of a alcohol end groups of polyester polymer with a polyvalent isocyanate compound.

The present invention provides a method of preparing a biodegradable resin, which includes: preparing a polyester polymer by polycondensation of bivalent alcohol monomers with bivalent carboxylic acid monomers; controlling a moisture content of the polyester polymer to 200 ppm or less; and connecting polymers by a reaction of a polyester polymer having a moisture content of 200 ppm or less with a polyvalent isocyanate and wherein, in connecting the polymers, less than 0.1 wt% of a polyvalent isocyanate, based on the polyester polymer, is reacted with the polyester polymer.

In preparing the polyester polymer, at least one bivalent alcohol monomer selected from the group consisting of 1,4-butylene glycol, 1,3-butylene glycol, 1,3-propylene glycol, 1,2-propylene glycol and 1,2-ethylene glycol may be polycondensed with at least one bivalent carboxylic acid monomer selected from the group consisting of succinic acid, adipic acid, suberic acid, sebacic acid, terephthalic acid, and anhydrides and derivatives thereof.

The polyvalent isocyanate may include at least one selected from the group consisting of 2,4-toluene diisocyanate, 2,6-toluene diisocyanate, diphenylmethane diisocyanate, xylene diisocyanate, 1,5-naphthylene diisocyanate, hexamethylene diisocyanate and triphenylmethane triisocyanate.

### [Advantageous Effects]

The biodegradable resin which uses a minimal amount of a chain extender, which is a harmful component to the human body and environment, in the preparation of the biodegradable resin and has excellent properties can be prepared.

Therefore, the biodegradable resin can be safely used for applications sensitive to harmful components, for example, packing materials for food and medicine.

### [Mode for Invention]

The present invention relates to a method of preparing the biodegradable resin as claimed.

The polyester polymer is prepared by polycondensation of a bivalent alcohol monomer in excess with a bivalent carboxylic acid monomer. And extra hydroxyl groups (-OH) which do not participate in the reaction remains in a main chain and terminal end groups of the prepared polymer. The remaining hydroxyl group is reacted with the isocyanate to form urethane bond, through which at least two polymers are connected.

[Reaction Scheme 1] R-(N=C=O)ₙ + n(R'-OH) -> R'-OOCHN-R-(NHCOO-R')₍ₙ₋₁₎ (n≥2)

In the present invention, a polymer connected by a chain extender is referred to as a "resin" to distinguish it from the polymer before the chain extension.

The biodegradable resin includes urethane bond containing nitrogen element, obtained from the result of Reaction Scheme 1. The biodegradable resin in which a nitrogen component is included in a limited amount of 160 ppm or less. The limited amount of the nitrogen component of the resin may be achieved by limiting the amount of the polyvalent isocyanate compound used as a chain extender in the preparation of the resin. Therefore, the biodegradable resin is less harmful to the human body and the environment.

The present invention as claimed provides a method of preparing a biodegradable resin, which includes: preparing a polyester polymer by polycondensation of bivalent alcohol monomers with bivalent carboxylic acid monomers; controlling a moisture content of the polyester polymer to 200 ppm or less; and connecting polymers by a reaction of the polyester polymer having a moisture content of 200 ppm or less with a polyvalent isocyanate compound.

In preparing the polyester polymer, the polyester polymer may be prepared by polycondensation of at least one bivalent alcohol monomer with at least one bivalent carboxylic acid monomer. Examples of the bivalent alcohol monomer may include 1,4-butylene glycol, 1,3-butylene glycol, 1,3-propylene glycol, 1,2-propylene glycol or 1,2-ethylene glycol, and examples of the bivalent carboxylic acid monomer may include succinic acid, adipic acid (AA), suberic acid, sebacic acid, terephthalic acid, and anhydrides and derivatives thereof. The most preferable combination of the alcohol monomer and the carboxylic acid monomer is butylene glycol, adipic acid (AA) and terephthalic acid.

Here, an excessive amount of an alcohol monomer may be used. Specifically, a molar ratio of an alcohol monomer to the carboxylic acid monomer is about less than 1.5, for example, 1.2 to 1.4. As described above, extra hydroxide groups remain in the polyester polymer and may be used to connect polymers by a urethane bond generated from a subsequent reaction with a polyvalent isocyanate compound.

The polycondensation of the alcohol monomer with the carboxylic acid monomer may be performed by a method conventionally used for esterification of an alcohol group and a carboxylic acid group. For example, poly(butylene succinate) (PBS) may be prepared by removing water generated during polycondensation by heating succinic acid and 1,4-butlyene glycol in a vacuum state. And poly(butylene adipate-co-terephthalate) (PBAT) may be prepared by a method of removing methanol generated during polycondensation of dimethyl terephthalate (DMT) and 1,4-butylene glycol, and then removing water generated during additional polycondensation with adipic acid (AA).

In controlling the moisture content of the polymer (hereinafter, referred to as "moisture content" as well) to 200 ppm or less, a known method, for example, vacuum drying or high-temperature drying, may be used. The vacuum drying is performed under a vacuum condition of 20 Torr or less at 70 to 80 °C for at least 4 hours. Here, to control the moisture content, a drying time may be changed. The moisture content of the dried polymer may be easily measured by a moisture content measuring device.

In the present claimed invention, a biodegradable resin is prepared by connecting polymers whose moisture content is controlled to 200 ppm or less using a chain extender. To this end, a polyvalent isocyanate compound is added to react in a limited amount of less than 0.1 wt% with respect to the polyester polymer.

As the polyvalent isocyanate, at least one selected from the group consisting of 2,4-toluene diisocyanate, 2,6-toluene diisocyanate, diphenylmethane diisocyanate, xylene diisocyanate, 1,5-naphthylene diisocyanate, hexamethylene diisocyanate and triphenylmethane triisocyanate may be used.

To connect the polyester polymers, the polyester polymer is melted at 160 to 180 °C after mixing with the polyvalent isocyanate, and then they are extruded at 160 to 180 °C. During the extrusion process, the hydroxyl group in the main chain and in the terminal end groups of the polyester polymer are reacted with isocyanate groups of the polyvalent isocyanate to form urethane bonds, connecting at least two polymers. The molecular weight of the prepared resin may be increased by chain extension of polyester polymers with isocyanate groups of the polyvalent isocyanate.

The prepared biodegradable resin has a nitrogen content of 160 ppm or less. In addition, the biodegradable resin has a number average molecular weight of 10,000 or more, a weight average molecular weight of 140,000 or more, and as a mechanical property, a melt flow index (MFI, 190 °C, a weight of 2,160 g) of 3.5 g/10 minutes or less. Further, when the resin is extruded into a film, workability and a surface state of the extruded film are good. The resin is similar to those of the conventional resin, in an aspect of physical characteristics such as tensile strength, tear strength and elongation of the film.

The biodegradable resin has properties suitable for application to various fields in which the conventional biodegradable resin is used even when the chain extender is used in a limited amount.

Particularly, the biodegradable resin may be used for application such as a fishing net, a fish trap, fishing line, agricultural mulching film, a drain board, a plastic garbage bag as well as applications sensitive to components harmful to the human body such as packing material for food or medicine.

Meanwhile, the polymer connecting reaction may be performed in the presence of an antioxidant. The antioxidant may inactivate radical generated during the connecting reaction of polymers by the chain extender. Therefore, as an amount of the used chain extender is increased, the antioxidant should be used in an increased amount. In the present invention, as the chain extender is used in a limited amount, the antioxidant is used in a very small amount compared to the conventionally used amount without any influence on the properties of the finally obtained resin.

Hereinafter, the present invention will be described in further detail with reference to Examples. However, it should be construed that the examples are provided to help better understanding of the present invention, and not to limit the scope of the present invention.

### Example 1

### [Preparation of polyester polymer, PBAT(poly(butylene adipate-co-terephthalate))]

0.48 mol of dimethyl terephthalate (DMT), 1.3 mol of 1,4-butylene glycol (1,4-BG), 0.03 g of antimony trioxide as a catalyst, and 0.2 g of tetra-n-butyl titanate were added to a 500 ml three-neck glass flask (Pyrex) equipped with a mechanical stirring device and a condenser, and esterified at 180 °C for 2 hours. In addition, 0.52 mol of adipic acid (AA) was added thereto, and esterified again at the same temperature for 1 hour. Subsequently, polycondensation was performed at 220 °C under a vacuum of lower than 2 Torr for 200 minutes, thereby a polyester polymer was obtained.

### [Control of Moisture Content of Polyester Polymer]

The synthesized polymer was charged to a vacuum dryer, and dried under pressure of 20 Torr or less at 80 °C for 4 hours or more. Then, the moisture content in the polymer was measured using a moisture content measuring device (C30 Compact Karl Fischer Coulometer).

### [Preparation of Biodegradable Resin]

40 mg of a diisocyanate (hexamethylene diisocyanate) was added as a chain extender to 200 g of the prepared polymer having the controlled moisture content. In addition, 40 mg of an antioxidant (tetrakis[methylene (3,5-di-t-butyl-4-hydroxyhydrocinnamate)]methane; AO-60) and 40 mg of a wax (ethylene bis-stearamide; EBS) were added thereto, mixed, and then extruded at 170 °C. Finally, a biodegradable resin was obtained.

### Examples 2 to 6 and Comparative Examples 1 and 2

Except that a moisture content of a polymer which was controlled in a step of controlling the moisture content of the polymer and kinds and amounts of a chain extender and an antioxidant in a polymer connecting step were used as shown in the following Table 1, biodegradable resins were prepared by the same procedure as described in Example 1.

### Comparative Example 3

A commercially available product, ecoflex BX7011 from BASF was used as a control group.

**[Table 1]**

| | Kind/Amount (mg) of Chain Extender Used | Chain Extender/Polymer (wt%) | Antioxidant (mg) | Moisture Content in Polymer |
|---|---|---|---|---|
| Example 1 | HMDI 40 | 0.02 | 40 | 148 ppm |
| Example 2 | HMDI 100 | 0.05 | 40 | 162 ppm |
| Example 3 | HMDI 160 | 0.08 | 40 | 153 ppm |
| Example 4 | HMDI 100 | 0.05 | 1 | 152 ppm |
| Example 5 | MDI 100 | 0.05 | 40 | 162 ppm |
| Example 6 | TDI 100 | 0.05 | 40 | 171 ppm |
| Comparative Example 1 | HMDI 100 | 0.05 | 40 | 313 ppm |
| Comparative Example 2 | HMDI 800 | 0.4 | 100 | 358 ppm |
| Comparative Example 3 | Ecoflex BX7011 | | | |

| | | | | |
|---|---|---|---|---|
| HMDI: hexamethylene diisocyanate MDI: 4,4'-methylene diphenyl diisocyanate TDI: 2,4-toluene diisocyanate Antioxidant: Tetrakis[methylene(3,5-di-t-butyl-4-hydroxyhydrocinnamate)]methane | | | | |

### Evaluation of Properties of Biodegradable Resin

MFIs and molecular weights of the resins obtained in Examples 1 to 6 and Comparative Examples 1 and 2 and the product used in Comparative Example 3 as the control group were measured.

The MFI was decided by measuring an amount of the resin that flowed at 190 °C under a load of 2160 g for 10 minutes using a MELTINDEXER (GOTPFERT, MI-3). To measure the molecular weight of the resin, 0.1 wt% of resin solution in chloroform was prepared, and the molecular weight of the resin was measured using a gel permeation chromatography (GPC; Agilent, HP 1100) at 25 °C and at a flow rate of 10 ml/min. Further, nitrogen content in the resin was measured using an atomic analyzer (FlashEA 1112, Thermo Finnigan, Italia).

The results are summarized in Table 2.

**[Table 2]**

| | MFI (g/10min) | Mn (Da) | Mw (Da) | Mw/Mn | Nitrogen Content (ppm) | |
|---|---|---|---|---|---|---|
| | | | | | Theoretical Value | Measured Value |
| Example 1 | 3.1 | 10,600 | 164,700 | 15.54 | 33 | 37 |
| Example 2 | 2.7 | 12,000 | 192,300 | 16.02 | 83 | 78 |
| Example 3 | 2.6 | 12,700 | 203,300 | 16.01 | 133 | 151 |
| Example 4 | 2.6 | 12,100 | 191,800 | 15.85 | 83 | 88 |
| Example 5 | 2.9 | 11,330 | 147,400 | 13.01 | 56 | 68 |
| Example 6 | 2.8 | 11,780 | 180,600 | 15.33 | 80 | 77 |
| Comparative Example 1 | 4.1 | 7,890 | 124,000 | 15.72 | 83 | 82 |
| Comparative Example 2 | 3.0 | 10,275 | 148,600 | 14.46 | 666 | 712 |
| Comparative Example 3 | 2.7 | 12,860 | 158,200 | 12.30 | - | 682 |

| | | | | | | |
|---|---|---|---|---|---|---|
| Mn: Number Average Molecular Weight Mw: Weight Average Molecular Weight | | | | | | |

The theoretical value of the nitrogen amount was obtained by calculating an amount of nitrogen included in diisocyanate with respect to the amount of all components used in preparing the biodegradable resin. For example, in Example 1, the theoretical value was calculated according to the following equation.
Total Weight of Biodegradable Resin: 200g (polymer)+40mg (HMDI)+40mg (A0-60)+40mg (EBS)= 200.12g
Nitrogen Amount in HMDI: 40mg×(28/168)=6.67mg
Nitrogen Content in Biodegradable Resin: 6.67mg/200.12g=33ppm

The nitrogen content in the finally obtained resin was measured at 160 ppm or less when the diisocyanate was used in a limited amount of less than 0.1 wt% with respect to the polyester polymer. This value is not significantly different from the calculated values (HMDI: 166 ppm/MDI:112ppm/TDI:160ppm)

In addition, when the diisocyanate was used in an amount of less than 0.1 wt% with respect to the polyester polymer, the moisture content of the polyester polymer was controlled under 200 ppm so as to obtain a desirable level of the molecular weight and mechanical property, and when the moisture content exceeded 200 ppm as in Comparative Example 1, it could be confirmed that the molecular weight did not reach a satisfactory level, and the MFI was increased. The MFI is a factor determining a mechanical strength of the product when the resin was processed. When the MFI is high, the mechanical strength is relatively decreased, which has a limit to application as a product. In addition, it can be confirmed that this result is the same as when various kinds of diisocyanate are used as a chain extender.

Meanwhile, even when the antioxidant was used in a decreased amount of 1 mg rather than 40 mg as shown in Example 4, there was no influence on the MFI and molecular weight.

### Evaluation of Characteristics of Biodegradable Resin Film

The color, workability and surface state of the films were compared and analyzed by extruding the biodegradable resins of Examples 2 and 4 and Comparative Examples 2 and 3 into films having a width of 42 cm and a thickness of 35 microns (based on 20 L of a plastic garbage bag) using a 50-mm film extruder. The extrusion temperature and rate were adjusted as shown in the following Table 3.

**[Table 3]**

| | Extrusion Temperature | Extrusion Rate (M/min) | Film Color (L/a/b) | Workability & Surface State |
|---|---|---|---|---|
| Example 2 | 190 | 6 | 81.65/-3.47/2.04 | Good |
| Example 4 | 190 | 6 | 81.6/-3.55/1.87 | Good |
| Comparative Example 2 | 190 | 6 | 82.3/-3.55/1.42 | Good |
| Comparative Example 3 | 180 | 5 | 85.47/1.23/13.18 | Slow Crystalization |

In the film color data, the higher an "L" value is, the brighter the color is, and as the closer the "a" and "b" values are to 0, the more excellent the color characteristics are.

As compared to Comparative Example 2 using a large amount of the chain extender, the film prepared from the resin of the present invention had no significant difference in color. However, it was revealed that the film of the present invention showed better workabilities such as dispersibility and crystallinity and surface state after extrusion than that of Comparative Example 3 prepared from a commercially available resin.

Next, the four kinds of the extruded films were sampled to analyze tensile strength, tear strength, and elongation using a universal testing machine (UTM).

**[Table 4]**

| | Thickness (µm) | Tensile Strength (MD/TD) (kgf/cm²) | Tear Strength (MD/TD) (kgf/cm) | Elongation (MD/TD) (%) |
|---|---|---|---|---|
| Example 2 | 70 (±5) | 521/564 | 132/148 | 650/600 |
| Example 4 | 70 (±5) | 526/607 | 131/149 | 650/600 |
| Comparative Example 2 | 70 (±5) | 519/527 | 136/135 | 650/600 |
| Comparative Example 3 | 75 (±5) | 503/601 | 131/143 | 675/625 |

It can be seen from the UTM measurement results that the film prepared from the resin of the present invention has similar characteristics such as tensile strength, tear strength and elongation, which fall within the margin of error, compared to those of the films prepared from the resins of Comparative Examples 2 and 3.

While example embodiments have been disclosed herein, it should be understood that other variations may be possible. Such variations are not to be regarded as a departure from the spirit and scope of example embodiments of the present application, and all such modifications as would be obvious to one skilled in the art are intended to be included within the scope of the following claims.

## Claims

1. A method of preparing a biodegradable resin, comprising:
preparing a polyester polymer by polycondensation of bivalent alcohol monomers with bivalent carboxylic acid monomers;
controlling a moisture content of the polyester polymer to 200 ppm or less; and
connecting polymers by a reaction of the polyester polymer having a moisture content of 200 ppm or less with a polyvalent isocyanate, and
wherein, in connecting the polymers, less than 0.1 wt% of a polyvalent isocyanate, based on the polyester polymer, is reacted with the polyester polymer.

2. The method according to claim 1, wherein, in preparing the polyester polymer, the polyester polymer is prepared by polycondensation of at least one bivalent alcohol monomer selected from the group consisting of 1,4-butylene glycol, 1,3-butylene glycol, 1,3-propylene glycol, 1,2-propylene glycol and 1,2-ethylene glycol with at least one bivalent carboxylic acid monomer selected from the group consisting of succinic acid, adipic acid, suberic acid, sebacic acid, terephthalic acid, and anhydrides and derivatives thereof.

3. The method according to claim 1, wherein the polyvalent isocyanate includes at least one selected from the group consisting of 2,4-toluene diisocyanate, 2,6-toluene diisocyanate, diphenylmethane diisocyanate, xylene diisocyanate, 1,5-naphthylene diisocyanate, hexamethylene diisocyanate and triphenylmethane triisocyanate.

## Patentansprüche

1. Verfahren zum Herstellen von einem biologisch abbaubaren Harz, umfassend:
Herstellen von einem Polyesterpolymer durch Polykondensation von bivalenten Alkoholmonomeren mit bivalenten Carboxylsäuremonomeren;
Regulieren von einem Feuchtigkeitsgehalt von dem Polyesterpolymer auf 200 ppm oder weniger; und
Verbinden von den Polymeren durch eine Reaktion von dem Polyesterpolymer, das einen Feuchtigkeitsgehalt von 200 ppm oder weniger aufweist, mit einem polyvalenten Isocyanat, und
und wobei bei dem Verbinden der Polymere weniger als 0,1 Gew.-% von einem polyvalenten Isocyanat, basierend auf dem Polyesterpolymer, mit dem Polyesterpolymer zur Reaktion gebracht werden.

2. Verfahren nach Anspruch 1, wobei bei dem Herstellen von dem Polyesterpolymer das Polyesterpolymer durch Polykondensation von mindestens einem bivalentem Alkoholmonomer, ausgewählt aus der Gruppe, bestehend aus 1,4-Butylenglycol, 1,3-Butylenglycol, 1,3-Propylenglycol, 1,2-Propylenglycol und 1,2-Ethylenglycol mit mindestens einem bivalentem Carboxylsäuremonomer, ausgewählt aus der Gruppe, bestehend aus Bernsteinsäure, Adipinsäure, Suberinsäure, Sebacinsäure, Terephthalsäure und Anhydriden und Derivate davon, hergestellt wird.

3. Verfahren nach Anspruch 1, wobei das polyvalente Isocyanat mindestens eines ausgewählt aus der Gruppe umfasst, bestehend aus 2,4-Toluoldiisocyanat, 2,6-Toluoldiisocyanat, Diphenylmethandiisocyanat, Xylendiisocyanat, 1,5-Naphthylendiisocyanat, Hexamethylendiisocyanat und Triphenylmethantriisocyanat.

## Revendications

1. Procédé de préparation d'une résine biodégradable, comprenant :
la préparation d'un polymère de polyester par polycondensation de monomères d'alcool bivalent avec des monomères d'acide carboxylique bivalent ;
la régulation d'une teneur en humidité du polymère de polyester à 200 ppm ou moins ; et
la connexion des polymères par une réaction du polymère de polyester ayant une teneur en humidité de 200 ppm ou moins avec un isocyanate polyvalent, et
dans lequel, lors de la connexion des polymères, moins de 0,1 % en poids d'un isocyanate polyvalent, par rapport au polymère de polyester, est mis à réagir avec le polymère de polyester.

2. Procédé selon la revendication 1, dans lequel, lors de la préparation du polymère de polyester, le polymère de polyester est préparé par polycondensation d'au moins un monomère d'alcool bivalent choisi dans le groupe constitué par le 1,4-butylène glycol, le 1,3-butylène glycol, le 1,3-propylène glycol, le 1,2-propylène glycol et le 1,2-éthylène glycol avec au moins un monomère d'acide carboxylique bivalent choisi dans le groupe constitué par l'acide succinique, l'acide adipique, l'acide subérique, l'acide sébacique, l'acide téréphtalique, et les anhydrides et dérivés de ceux-ci.

3. Procédé selon la revendication 1, dans lequel l'isocyanate polyvalent comprend au moins un élément choisi dans le groupe constitué par le diisocyanate de 2,4-toluène, le diisocyanate de 2,6-toluène, le diisocyanate de diphénylméthane, le diisocyanate de xylène, le diisocyanate de 1,5-naphtylène, le diisocyanate d'hexaméthylène et le triisocyanate de triphénylméthane.
